# EUROPÄISCHE PATENTANMELDUNG

(11) **EP 0 685 660 A1**
(43) Veröffentlichungstag der Anmeldung: **06.12.1995**
(21) Anmeldenummer: 95102386.0
(22) Anmeldetag: 21.02.1995
(51) Int. Cl.: F16C 13/00

(54) **Walze für eine Papiermaschine**

(30) Priorität: 04.05.1994 DE 4415645
(71) Anmelder: Voith Sulzer Papiermaschinen Gesellschaft mbH, 89522 Heidenheim (DE)
(72) Erfinder: Zuefle, Thomas, D-89518 Heidenheim (DE); Schiel, Christian, D-89520 Heidenheim (DE); Steiner, Karl, Dr., D-89542 Herbrechtingen (DE)
(74) Vertreter: Gahlert, Stefan, Dr.-Ing.

(57) **Zusammenfassung**

Es wird eine Walze für eine Papiermaschine angegeben, die zumindest ein im wesentlichen in Axialrichtung der Walze (30) verlaufendes Leistenelement (32) umfaßt, das mit einer Mehrzahl von Stützelementen im wesentlichen gegen radiale Kräfte abgestützt ist. Die Stützelemente sind mit Stellmitteln (34) gekoppelt, mittels derer in Abhängigkeit von einer bestimmten äußeren Last ein vorbestimmter Verlauf der Biegekurve des Leistenelementes (32) einstellbar ist. Ist die Walze als Schuhpreßwalze ausgebildet, so kann das Leistenelement auch unmittelbar mit dem Preßschuh (54) gekoppelt sein. So läßt sich bei Schuhpreßwalzen eine sichere Einstellung eines hydrodynamischen Schmierkeils erreichen und bei anderen Walzen ein gewünschter Verlauf der Biegekurve des Leistenelementes (32) unter einer bestimmten äußeren Last einstellen.

## Beschreibung

Die Erfindung betrifft eine Walze für eine Papiermaschine, mit zumindest einem im wesentlichen in Axialrichtung der Walze verlaufenden Leistenelement, das mit einer Mehrzahl von Stützelementen im wesentlichen gegen radiale Kräfte abgestützt ist.

Eine derartige Walze ist aus der DE-A-3 311 998 bekannt. Bei der bekannten Anordnung handelt es sich um eine Schuhpreßwalze, bei der ein Preßmantel über Führungsleisten geführt ist, die mittels Federelementen an einem inneren, biegesteifen Tragkörper abgestützt sind, so daß ein biegefreier Verlauf des Preßmantels in Axialrichtung sichergestellt ist. Als nachteilig bei dieser Ausführung hat sich erwiesen, daß die Ausbildung eines inneren Tragkörpers als biegesteifes Element insbesondere bei breiten Preßwalzen sehr aufwendig und damit teuer ist. Außerdem stellen sich bei Durchbiegung des Tragkörpers dessen Zapfen schief, so daß sich der Tragkörper auch an seinen Enden von der Gegenwalze entfernt. Auch dadurch würde sich die Gleitoberfläche des Leistenelementes gegenüber der Gleitoberfläche des Preßschuhs vertikal in unerwünschter Weise verschieben, insbesondere bei der hoher Linienlast oder bei langen Zapfen. Ferner sind Anwendungsfälle denkbar, bei denen ein geradliniger Verlauf der Führungsleisten gar nicht erwünscht ist, sondern vielmehr die Einstellung einer vorbestimmten Biegekurve der Führungsleiste in Abhängigkeit von einer äußeren Last.

Bei Schuhpreßwalzen gemäß der eingangs erwähnten DE-A-3 311 998 läuft der Preßmantel auf einem feststehenden Tragkörper um, wobei bei ausreichend hoher Geschwindigkeit des Preßmantels eine hydro-dynamische Schmierung erreicht werden soll. In bestimmten Fällen, insbesondere dann, wenn auf der Einlaufseite der Schuhpresse kein Platz für eine Filzleitwalze vorhanden ist, besteht die Gefahr, daß das unter einer gewissen Längsspannung stehende Filzband den Preßmantel derart gegen den Einlaufbereich des Preßschuhs drückt, daß sich unter bestimmten Belastungszuständen ein hydro-dynamischer Schmierkeil nicht im erforderlichen Maße ausbilden kann. Dies kann dazu führen, daß der Preßmantel infolge nicht ausreichender Schmierung vorzeitig verschleißt. Darüberhinaus ergibt sich eine erhebliche Erwärmung des Preßmantels, eine höhere Leistungsaufnahme sowie eine Veränderung der Preßparameter.

Die Aufgabe der Erfindung besteht darin, eine Walze für eine Papiermaschine zu schaffen, bei der in Abhängigkeit von einer bestimmten äußeren Last auf die Walze ein vorbestimmter Verlauf der Biegekurve des Leistenelementes einstellbar ist. Ferner soll bei einer Schuhpreßwalze ein ausreichender hydro-dynamischer Schmierkeil möglichst bei allen Betriebszuständen gewährleistet sein.

Diese Aufgabe wird erfindungsgemäß dadurch gelöst, daß bei einer Walze der eingangs genannten Art die Stützelemente mit Stellmitteln gekoppelt sind, mittels derer in Abhängigkeit von einer bestimmten äußeren Last ein vorbestimmter Verlauf der Biegekurve des Leistenelementes und vorzugsweise deren vertikale Lage in Bezug auf eine Gegenwalze einstellbar ist.

Die Aufgabe der Erfindung wird auf diese Weise vollkommen gelöst, da unabhängig von der Durchbiegung der Walze selbst bzw. unabhängig von der Durchbiegung eines in der Walze vorgesehenen Tragkörpers die Biegekurve des Leistenelementes beliebig einstellen läßt. Falls gewünscht, läßt sich auch die vertikale Lage des Leistenelements in Bezug auf die Gegenwalze beliebig einstellen. Auf diese Weise kann die Walze weniger biegesteif ausgeführt werden, und es lassen sich beliebige Biegekurven in Abhängigkeit von einer bestimmten äußeren auf die Walze wirkenden Last einstellen.

Sollte sich etwa bei einer Schuhpreßwalze eine gewisse Durchbiegung und/oder Abstandsänderung zwischen Gegenwalze und Tragkörper ergeben, so kann die Lage des Führungselementes entsprechend angepaßt werden, um eine optimale Führung eines über die Schuhpreßwalze geführten Preßbandes zu ermöglichen. Dabei wird gleichzeitig gewährleistet, daß immer ein ausreichender hydro-dynamischer Schmierkeil am Preßschuh besteht.

Erfindungsgemäß wird erreicht, daß auch in den Fällen, in denen der Preßschuh eine gewisse Durchbiegung erleidet, beispielsweise, wenn die Gegenwalze (oberhalb der erfindungsgemäßen Walze angeordnet) sich in Preßrichtung des Preßschuhs durchbiegt, der Preßschuh dieser Durchbiegung folgt, und das Leistenelement eine der Durchbiegung des Preßschuhs angepaßte Durchbiegung erfährt.

Darüberhinaus läßt sich das erfindungsgemäße Leistenelement bei einer Vielzahl anderer Anwendungsfälle einsetzen, bei denen es darauf ankommt, eine bestimmte Durchbiegung des Leistenelementes einzustellen. Somit läßt sich das erfindungsgemäße Leistenelement beispielsweise vorteilhaft auch bei Durchbiegungseinstellwalzen oder bei Saugwalzen, insbesondere auch bei Saugpreßwalzen anwenden.

Es versteht sich, daß bei einer Walze auch mehrere Leistenelemente vorgesehen sein können. Auch können eine oder mehrere Leistenelemente zum Abdichten zwischen Sektoren unterschiedlichen Druckes verwendet werden.

In vorteilhafter Weiterbildung der Erfindung ist die erfindungsgemäße Walze als Preßwalze für eine Papiermaschine mit einem zwischen zwei Preßelementen gebildeten Preßspalt ausgebildet, außerhalb dessen das Leistenelement angeordnet ist, wobei die Walze einen innenliegenden Tragkörper zur Aufnahme äußerer Kräfte aufweist, an dem die Stützelemente abgestützt sind.

Diese Ausführung betrifft den zuvor bereits erwähnten Anwendungsfall, daß das Leistenelement in einer Preßwalze außerhalb der Preßebene angeordnet ist. Es ist zwar bei Durchbiegungseinstellwalzen grundsätzlich bekannt (vgl. DE-A-4 123 115), eine gewünschte Durchbiegung eines Walzenmantels mit Hilfe einer Hydraulikkammer einzustellen, jedoch bezieht sich diese Maßnahme ausschließlich auf den Bereich des Preßspaltes selbst, um nämlich bei breiten Durchbiegungseinstellwalzen die Aufnahme außerordentlich hoher Linienkräfte im Preßspalt zu ermöglichen, ohne daß hierzu aufwendige Lager erforderlich sind, um die gesamte Walze drehbar zu lagern. Vielmehr wird nur der Walzenmantel drehbar gelagert und der Hauptteil der Preßkraft direkt hydraulisch auf einem feststehenden Joch abgestützt.

Erfindungsgemäß wird nun jedoch vorgeschlagen, in einem Bereich außerhalb des Preßspaltes ein Leistenelement anzuordnen, das mit Stellmitteln gekoppelt ist, um einen vorbestimmten Verlauf der Biegekurve des Leistenelementes unter Wirkung einer äußeren Last einzustellen.

In weiter vorteilhafter Ausführung der Erfindung umfaßt zumindest ein Stellmittel steuerbare hydraulische oder pneumatische Stellelemente.

Bei dieser Ausführung läßt sich eine Einstellung der Biegekurve des Leistenelementes auf besonders einfache Weise erreichen, wobei sich insbesondere verschiedene Einflußparameter auf einfache Weise über eine entsprechende Hydraulik- oder Pneumatikschaltung berücksichtigen lassen, um einen gewünschten Biegeverlauf einzustellen.

In der einfachsten Ausführung weist hierbei ein Stellmittel einen einseitig wirkenden Fluidzylinder auf, dem ein Federelement zur Rückstellung zugeordnet ist.

In alternativer Ausführung kann natürlich auch auf ein Federelement verzichtet werden und stattdessen ein zweiseitig wirkender Fluidzylinder verwendet werden.

Eine noch weiter vereinfachte Bauweise kann erfindungsgemäß erreicht werden, wenn die Stellmittel Federelemente mit unterschiedlichen Federkonstanten umfassen, die auf eine bestimmte Durchbiegung der Walze unter Last abgestimmt sind, um einen vorgegebenen Verlauf der Biegekurve des Leistenelementes einzustellen.

Sofern eine Verstellbarkeit der Biegekurve des Leistenelementes während des Betriebes nicht erforderlich oder nicht erwünscht ist, ergibt sich so eine noch weitere Vereinfachung, da auf die Verwendung von steuerbaren Hydraulik- oder Pneumatikelemente vollständig verzichtet werden kann. Hierzu müssen lediglich die Federkonstanten der betreffenden Federelemente der äußeren Belastung entsprechend angepaßt werden, um in einem bestimmten Belastungsfall eine gewünschte Biegekurve des Leistenelementes zu erreichen.

In alternativer Weise kann man dieses Ergebnis unter Verwendung von Federelementen mit gleichen Federkonstanten erreichen, denen Kolben unterschiedliche Kolbenflächen zugeordnet sind, die mit dem gleichen Druck angesteuert werden.

Bei einer weiteren Ausgestaltung der Erfindung umfaßt zumindest ein Stellmittel einen motorisch angetriebenen Stelltrieb.

Diese Maßnahme hat den Vorteil, daß sich eine besonders feinfühlige Einstellung einer gewünschten Biegekurve erreichen läßt, wozu beispielsweise ein motorischer Antrieb mit einem entsprechenden Untersetzungsverhältnis ggf. in Kombination mit einer Gewindespindel entsprechend niedriger Steigung verwendet werden kann. Zusätzlich lassen sich verschiedene Einflußfaktoren im Rahmen einer geeigneten Steuerelektronik bei der Steuerung der motorisch angetriebenen Stelltriebe berücksichtigen.

Da sich der Abstand zwischen der Tragleiste und einem Tragkörper, der unter Last in der Regel eine Durchbiegung erleidet, verändert, verändert sich auch der Abstand der einzelnen Stützelemente zueinander, so daß in vorteilhafter Weiterbildung der Erfindung die Stellmittel gelenkig mit dem Tragkörper verbunden sind.

Gemäß einer weiteren Ausgestaltung der Erfindung ist vorgesehen, das Leistenelement axial in eine Mehrzahl von Leistenelementabschnitten zu unterteilen, die gelenkig miteinander verbunden sind.

Somit lassen sich in vorteilhafter Weise einzelne axiale Bereiche des Leistenelementes voneinander entkoppeln, falls diese beispielsweise stark unterschiedlichen Belastungen ausgesetzt sind. Dadurch lassen sich einzelne axiale Abschnitte des Leistenelementes präziser steuern, da die bei einer einteiligen Ausführung bestehende Beeinflussung benachbarter axialer Bereiche bei Verstellung der Stützelemente stark herabgesetzt wird.

Die Gelenke zwischen den einzelnen Leistenelementabschnitten können hierbei auch durch Querschnittsschwächungen in Form von Nuten oder dgl. erreicht werden, so daß sich infolge des verringerten Biegewiderstandes im Bereich der Querschnittsschwächungen im Ergebnis die Wirkung von Gelenken ergibt.

Ist die erfindungsgemäße Walze als Schuhpreßwalze mit einem hydraulisch an eine Gegenwalze anpreßbaren Preßschuh ausgebildet, über den ein Preßmantel geführt ist, der über Schmiermittel umläuft, so ist es besonders vorteilhaft, das Leistenelement in Bahnlaufrichtung gesehen unmittelbar vor dem Preßspalt anzuordnen.

Wie zuvor bereits erwähnt, kann auf diese Weise trotz des von einem Filzband auf den Preßmantel ausgeübten Druckes, der aus Längsspannung im Filz und Umschlingung der Walze resultiert, die Ausbildung eines ausreichenden hydro-dynamischen Schmierkeils sichergestellt werden.

In zusätzlicher Weiterbildung dieser Ausführung kann das Leistenelement Mittel zur Absaugung überschüssigen Schmiermittels aufweisen.

Eine derartige Ausführung wird vorteilhaft dann angewendet, wenn die erfindungsgemäße Walze mit dem Preßschuh oberhalb der Gegenwalze angeordnet ist.

Die Aufgabe der Erfindung wird ferner bei einer Walze für eine Papiermaschine mit einem zwischen zwei Walzen gebildeten Preßspalt mit einem hydraulisch an eine Gegenwalze anpreßbaren Preßschuh, über den ein Preßmantel umläuft, wobei die Walze zumindest ein außerhalb des Preßspaltes im wesentlichen axial angeordnetes Leistenelement aufweist, dadurch gelöst, daß das Leistenelement am Preßschuh festgelegt ist.

Auf diese Weise läßt sich bei einem Preßschuh, der infolge einer äußeren Last eine Durchbiegung erleidet, auch ohne die Verwendung von Stellmitteln erreichen, daß das Leistenelement immer der Biegung des Preßschuhs unmittelbar folgt, so daß die Aufrechterhaltung eines ausreichenden hydro-dynamischen Schmierkeils auch bei Veränderung der Durchbiegung des Preßschuhs gewährleistet ist, da eine Unterbrechung oder ein Abquetschen des Schmierfilms infolge der parallelen Führung des Leistenelementes zum Preßschuh verhindert wird.

In zweckmäßiger Weiterbildung dieser Ausführung ist das Leistenelement in Bahnlaufrichtung gesehen unmittelbar vor dem Preßschuh angeordnet.

In zusätzlicher Weiterbildung dieser Ausführung ist das Leistenelement einstückig mit dem Preßschuh ausgebildet.

Das Leistenelement kann hierbei beispielsweise als Verlängerung des Preßschuhs zu dessen Einlaufseite hin ausgebildet sein, wobei eine Trennung zwischen dem Leistenelement und dem Preßschuh z.B. durch eine Hinterschneidung am Ende des Leistenelementes erreicht werden kann. Zusätzlich kann in die so gebildete Tasche zwischen Leistenelement und Preßschuh über einen axialen oder radialen Kanal Schmiermittel zugeführt werden, sofern dies erforderlich ist.

Hierzu können gemäß einer Weiterbildung der Erfindung Längsrillen in der Oberfläche des Leistenelementes mit einer Tiefe von vorzugsweise 0,2 bis 1 mm vorgesehen sein, um den Fluß des Schmiermittels in Bahnlaufrichtung zu verbessern.

Es versteht sich, daß die vorstehend genannten und die nachstehend noch zu erläuternden Merkmale nicht nur in der jeweils angegebenen Kombination, sondern auch in anderer Kombination oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine schematische stark vereinfachte Darstellung einer ersten Ausführung einer erfindungsgemäßen Walze im unbelasteten Zustand;
- Fig. 2: die Ausführung gemäß Fig. 1 bei Belastung mit einer Linienkraft P;
- Fig. 3: einen Ausschnitt einer zweiten Ausführung einer erfindungsgemäßen Walze, die als Schuhpreßwalze ausgebildet ist, im Bereich des Preßspaltes;
- Fig. 4: eine weitere Ausführung einer erfindungsgemäßen Walze, die gegenüber der Ausführung gemäß Fig. 3 dadurch abgewandelt ist, daß die Schuhpreßwalze obenliegend angeordnet ist;
- Fig. 5: eine weitere Ausführung der Erfindung, die gegenüber der Ausführung gemäß Fig. 3 leicht abgewandelt ist;
- Fig. 6: eine weitere Abwandlung der Ausführung gemäß Fig. 5;
- Fig. 7: eine weitere Ausführung des Leistenelementes, das aus einzelnen Gelenkabschnitten besteht;
- Fig. 8: eine weitere Abwandlung eines Stellelementes zur Verstellung des erfindungsgemäßen Leistenelementes;
- Fig. 9: einen Querschnitt einer weiteren als Saugwalze ausgebildeten Walze;
- Fig. 10: ein weiteres Anwendungsbeispiel der Erfindung als Durchbiegungseinstellwalze, die ausschnittsweise im Querschnitt dargestellt ist und
- Fig. 11: eine polygonartige Anordnung mehrerer Leistenelemente um einen sich unter Last durchbiegenden Tragkörper im Querschnitt.

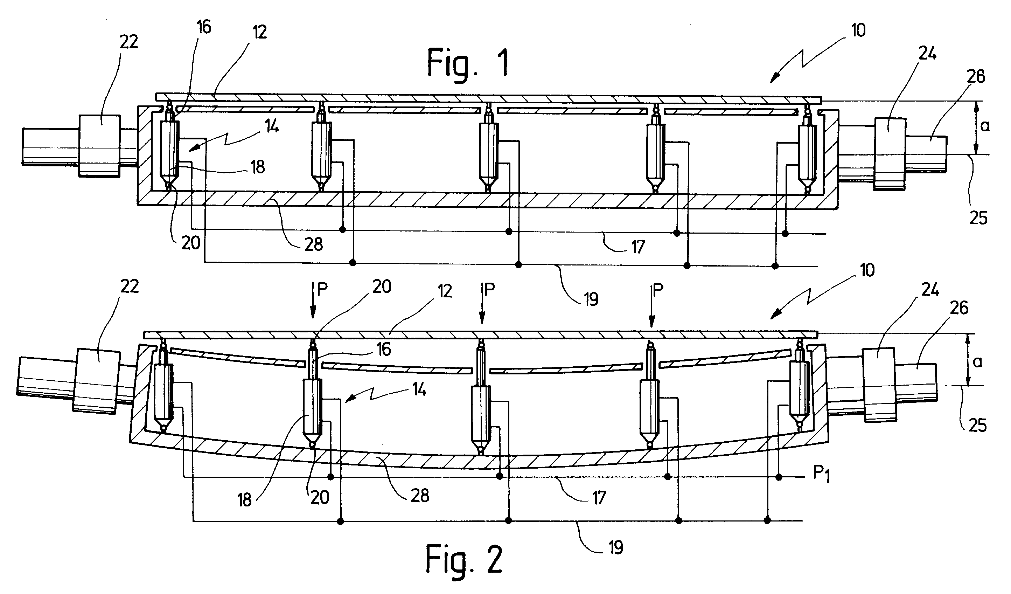

Eine erste Ausführungsform einer erfindungsgemäßen Walze ist in den Fig. 1 und 2 insgesamt mit der Ziffer 10 bezeichnet.

Die Walze umfaßt einen stationären Tragkörper 28, dessen beide Enden als stationäre Lagerzapfen 26 ausgebildet sind, die an einem Ende mit einem Festlager 24 und am anderen Ende mit einem Loslager 22 gelagert sind. Auf dem Tragkörper 28 ist ein Walzenmantel drehbar angeordnet (nicht dargestellt).

Auf dem Tragkörper 28 ist parallel zum Walzenmantel ein Leistenelement 12 angeordnet, das bei Belastung der Walze 10 mit einer Linienkraft in Axialrichtung der Walze parallel ausgerichtet bleiben soll oder aber bei bestimmten Anwendungsfällen eine gewünschte Biegekurve einnehmen soll. Dabei soll auch die Höhe des Leistenelementes 12 relativ zu einer Gegenwalze einstellbar sein.

Das Leistenelement 12 ist über eine Mehrzahl von Stützelementen, die über Gelenke 20 festgelegt sind, mit Stellmitteln gekoppelt, die insgesamt mit der Ziffer 14 bezeichnet sind. Im dargestellten Fall handelt es sich bei den Stellmitteln um doppelt wirkende Hydraulikzylinder, die entweder über eine Druckleitung 17 ausgefahren werden können, oder über eine Druckleitung 19 eingefahren werden können.

Während in Fig. 1 sowohl der Tragkörper 28 als auch das Leistenelement 12 unbelastet sind und sich somit keine Durchbiegung des Leistenelementes 12 einstellt, so daß die Stellmittel 14 drucklos gehalten werden können und so das Leistenelement 12 in seiner Endlage gehalten ist, ist die Walze 10 gemäß Fig. 2 mit einer Linienkraft P belastet.

Der Tragkörper 28 erleidet somit eine Durchbiegung, wie dies schematisch in Fig. 2 angedeutet ist.

Im dargestellten Fall wird die Druckleitung 17 der Stellmittel 14 mit einem Druck P1 beaufschlagt, der auf die Stellmittel 14 einwirkt, so daß die aus einer Linienkraft P resultierende Kraft durch die von den Stellmitteln 14 ausgeübte Gegenkraft kompensiert wird und das Leistenelement 12 keine Durchbiegung erleidet, so daß der Abstand a zwischen dem Leistenelement 12 und einer durch die Mittelpunkte der Lager 22, 24 verlaufenden Achse 25 konstant bleibt.

Fällt die Linienkraft P wieder ab und geht auf Null zurück, so erfährt der Tragkörper 28 keine Durchbiegung mehr, und die Druckleitung 17 kann drucklos gehalten werden, während die Druckleitung 19 mit einem geringen Druck beaufschlagt wird, um die Kolbenstangen 16 wieder in die Hydraulikzylinder 18 einzufahren, so daß das Leistenelement 12 wieder seine Ausgangslage gemäß Fig. 1 einnimmt.

In den Fig. 1 und 2 ist der allgemeinste Anwendungsfall für die Ausrichtung eines Leistenelementes 12 mit einer gewünschten Biegekurve unter Last dargestellt. Es versteht sich, daß ausgehend von dieser Ausführung die verschiedensten Anwendungsfälle denkbar sind. So kann das Leistenelement z.B. für die Stützung eines über die Walze geführten Preßmantels verwendet werden, zur Abstreifung von Flüssigkeiten, zur Absaugung oder Aufbringung von Flüssigkeiten gleichmäßig über die Breite der Walze, und zum Dichten zwischen Sektoren unterschiedlichen Druckes an der Walze, etwa bei einer Schuhpreßwalze, bei einer Saugwalze oder bei einer Durchbiegungseinstellwalze. Einzelne dieser Anwendungsfälle werden nachfolgend anhand der weiteren Figuren beschrieben.

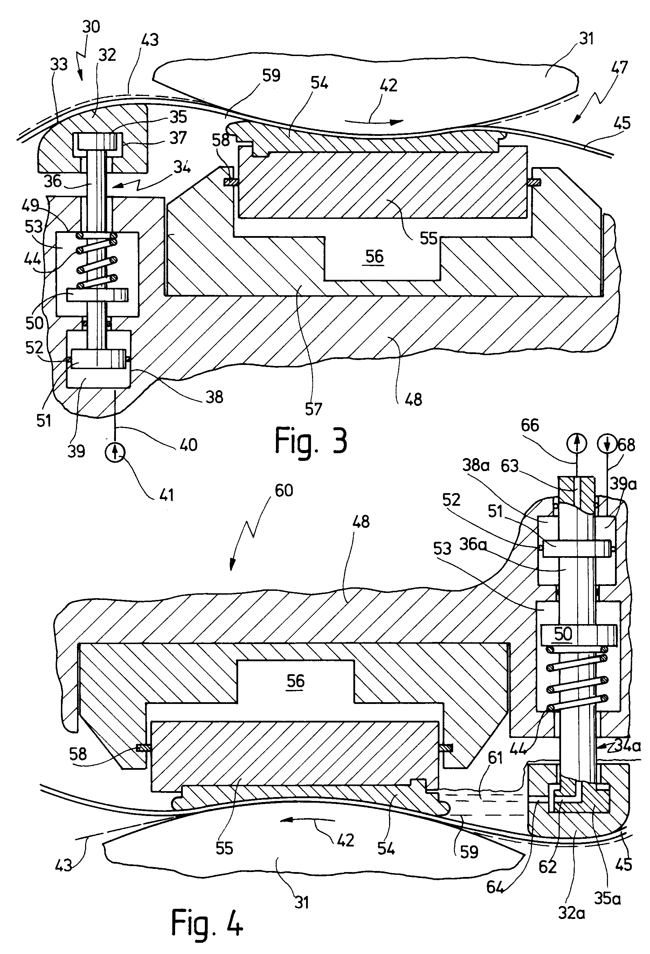

Fig. 3 zeigt eine Ausführung der erfindungsgemäßen Walze als Schuhpreßwalze, die insgesamt mit der Ziffer 30 bezeichnet ist.

Die Schuhpreßwalze 30 weist einen Preßschuh 54 auf, der auf einem Stützteil 55 gehalten ist und durch einen im Druckraum 56 zwischen dem Stützteil 55 und einem darunterliegenden Schuhbett 57 herrschenden Hydraulikdruck gegen eine oben liegende Gegenwalze 31 anpreßbar ist. Der Druckraum 56 ist über eine Dichtung 58 abgedichtet. Über den Preßschuh 54 ist ein Preßmantel 45 geführt, der in an sich bekannter Weise um einen stationären Tragkörper der Walze 30 umläuft und dabei an seiner dem Preßschuh 54 zugewandten Seite auf einem Schmierfilm hydro-dynamisch geschmiert ist. Der Preßmantel 45 ist hierzu in an sich bekannter Weise seitlich abgedichtet (vgl. DE-A-3 501 635).

Durch den zwischen dem Preßschuh 54 und der Gegenwalze 31 gebildeten Preßspalt 47 läuft ein Filzband, das lediglich schematisch mit der Ziffer 43 angedeutet ist und auf der eine zu entwässernde Papierbahn (nicht dargestellt) geführt ist.

Die Papierbahn bewegt sich somit zusammen mit dem Preßmantel 45 und dem Filzband 43 in Bahnlaufrichtung 42 durch den Preßspalt 47. Am Einlauf des Preßschuhs 54 bildet sich dabei ein Schmierspalt 59 aus, über den Schmiermittel in den zwischen den beiden durch den Preßmantel 45 und den Preßschuh 54 gebildeten Zwischenraum eintritt. Bei ausreichender Geschwindigkeit des Preßmantels 45 bildet sich dabei ausgehend vom Schmierspalt 59 an der Einlaufseite des Preßschuhs 54 ein hydro-dynamischer Schmierkeil aus, so daß das Preßband 45 trotz der hohen in Radialrichtung der Walze 30 auf den Preßmantel ausgeübten Belastung im Preßspalt 47 weitgehend reibungsfrei umläuft.

Voraussetzung für die Ausbildung eines ausreichenden hydrodynamischen Schmierkeils ist dabei, daß genügend Schmiermittel über dem Schmierspalt 59 in den Zwischenraum zwischen Preßband 45 und Preßschuh 54 eintreten kann.

Ist nun das Preßband 45 schon vor dem Eintritt in den Preßspalt 47 hohen radialen Belastungen ausgesetzt, die insbesondere auf der Längsspannung im Filzband 43 und auf einer Umschlingung der Nase des Preßschuhs 54 durch das Filzband 43 und den Preßmantel 45 beruhen, so kann dies zu einer Verkleinerung des Schmierspaltes 59 und im Extremfall zu einer Abquetschung des Preßmantels 45 an der Einlaufseite des Preßschuhs 54 führen, so daß keine ausreichende hydro-dynamische Schmierung sichergestellt ist. Ein derartiger Fall kann insbesondere dann auftreten, wenn auf der Einlaufseite der Schuhpreßwalze aus Platzgründen auf eine Filzleitwalze verzichtet werden muß.

Um diese Gefahr auszuschließen, ist in Bahnlaufrichtung 42 gesehen unmittelbar vor dem Preßschuh 54 ein Leistenelement 32 angeordnet, über dessen Oberfläche 33 der Preßmantel 45 geführt ist. Das Leistenelement 32 verläuft in Axialrichtung der Walze 30 und ist am Tragkörper 48 der Walze über eine Mehrzahl von Stützelemente, die mit Stellmitteln versehen sind, die insgesamt mit der Ziffer 34 bezeichnet sind, abgestützt und dabei an die Belastung des Preßmantels 45 anpaßbar, um eine gewünschte Biegekurve des Leistenelementes 32 einzustellen und somit eine optimale hydro-dynamische Schmierung des Preßmantels sicherzustellen.

Hierzu greift eine Mehrzahl von hydraulisch anpreßbaren Kolbenstangen 36, deren Enden als zylindrische Stößel 35 ausgebildet sind, in eine im Leistenelement 32 verlaufende Längsnut 37 ein, um das Leistenelement 32 in einer gewünschten Weise abzustützen. In Fig. 3 ist in der Schnittdarstellung gemäß Fig. 3 natürlich nur ein in der Schnittebene liegendes Stellmittel 34 mit der betreffenden Kolbenstange 36 und der Hydraulikeinrichtung erkennbar.

Die Kolbenstange 36 verläuft durch eine zylindrische Ausnehmung 53 und eine weitere darunterliegende zylindrische Ausnehmung 38 im Tragkörper 48. In der oberen zylindrischen Ausnehmung 53 ist zwischen deren oberer Stirnfläche und einem auf der Kolbenstange 36 starr fixierten Flansch 50 ein Federelement 44 angeordnet, durch das die Kolbenstange 36 eine nach unten gerichtete Vorspannung erfährt.

Am unteren Ende der Kolbenstange 36 ist ein zylindrischer Kolben 51 vorgesehen, der mittels einer Dichtung 52 dichtend an der Wand des unteren zylindrischen Hohlraums 38 anliegt. Dadurch wird im unteren Bereich des zylindrischen Hohlraums 38 ein abgedichteter Druckraum 39 gebildet, der über eine Druckleitung 40 von einer Druckquelle 41 aus mit Druck beaufschlagbar ist, um die Kolbenstange 36 gegen die Rückstellkraft des Federelementes 44 nach oben hin zu beaufschlagen.

Dabei ist der Druck in der Druckkammer 39 vorzugsweise derart gesteuert, daß sich das Leistenelement 32 an die jeweilige Form des Preßschuhs 54 anpaßt, und somit eine optimale Führung des Preßmantels 45 an der Einlaufseite des Preßschuhs 54 gewährleistet ist, um eine ausreichende hydro-dynamische Schmierung sicherzustellen. Die Form des Preßschuhs 54 und damit das Profil des Leistenelementes 32 hängt davon ab, ob sich die Gegenwalze 31 durchbiegt oder nicht.

Neben der im Preßspalt 47 wirkenden Linienkraft können hierbei weitere Einflußgrößen, wie etwa die Umlaufgeschwindigkeit des Preßmantels 45, die Temperatur und dgl. über eine elektronische Steuerung berücksichtigt werden, um eine optimale Führung des Preßmantels 45 an der Einlaufseite des Preßschuhs 54 sicherzustellen.

In manchen Fällen ist es möglich, die Druckräume 39 und 56 gleichzeitig mit dem gleichen Druck aus der gleichen Druckquelle mit Druckmittel zu beaufschlagen, so daß der Preßschuh 54 bzw. das Stützteil 55 und die Leiste 32 gleichzeitig aus ihrer Ruhelage in die dargestellte Arbeitsposition ausfahren. Dagegen hat eine Beaufschlagung der Druckräume 39 unabhängig vom Druck im Druckraum 56 den Vorteil, daß die Leiste 32 auch schon dann eine Last z.B. aus der Längsspannung des Filzbandes 43 aufnehmen kann, wenn im Druckraum 56 noch kein Druck oder nicht der volle Druck vorhanden ist, wie z.B. beim Anfahren der Papiermaschine.

Eine gegenüber der Ausführung gemäß Fig. 3 leicht abgewandelte Ausführung einer erfindungsgemäßen Walze ist in Fig. 4 insgesamt mit der Ziffer 60 bezeichnet. Die gleichfalls als Schuhpreßwalze ausgebildete Walze 60 ist hierbei oberhalb der Gegenwalze 31 angeordnet.

Überschüssiges Schmiermittel 61 an der Einlaufseite des Preßschuhs 54 kann hierbei zusätzlich über eine Absaugöffnung 64 im Leistenelement 32a und einen durch die Kolbenstange 36a des Stellmittels 34a verlaufenden Saugkanal 62, 63 über eine angeschlossene Saugleitung 66 abgesaugt werden. Wiederum kann der im zylindrischen Hohlraum 38a gebildete Druckraum 39a über eine Druckleitung 68 mit Druck beaufschlagt werden, um den Kolben 51 mit der Kolbenstange 36a gegen die Kraft des Federelementes 44 zur Abstützung des Leistenelementes 32a auszufahren.

Im übrigen entspricht der Aufbau der Tragleiste 32a und des Stellmittels 34a vollständig dem zuvor anhand von Fig. 3 beschriebenen Aufbau, weshalb auch für entsprechende Teile entsprechende Bezugsziffern verwendet wurden.

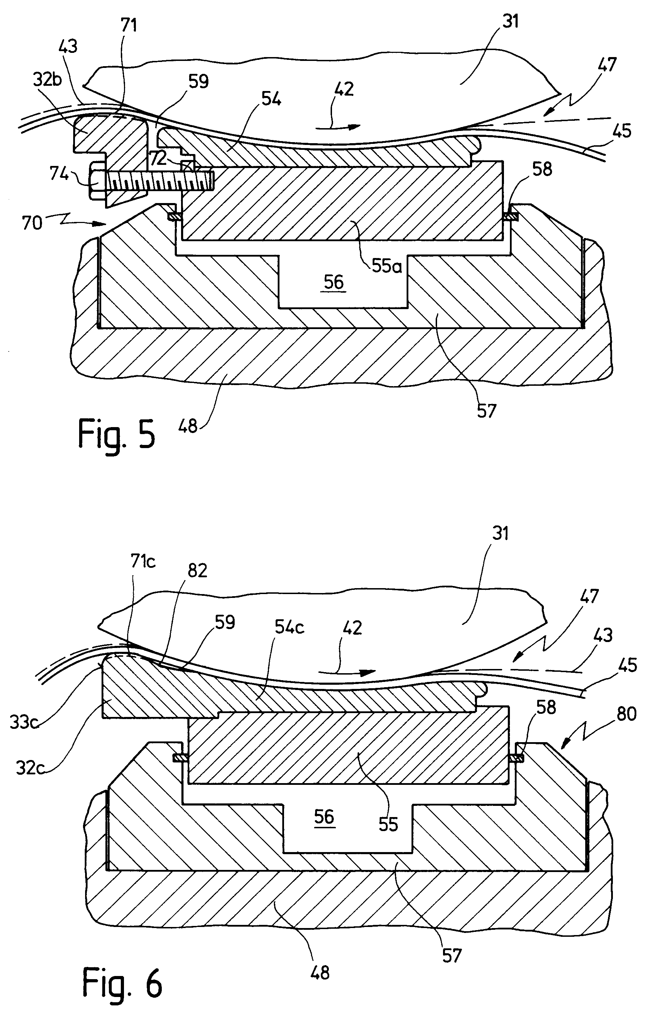

Eine weitere Abwandlung einer erfindungsgemäßen Walze ist in Fig. 5 insgesamt mit der Ziffer 70 bezeichnet.

Auch hierbei handelt es sich wiederum um eine Schuhpreßwalze mit einem Preßschuh 54, der an eine darüber angeordnete Gegenwalze 31 hydraulisch anpreßbar ist. In Abwandlung von den zuvor beschriebenen Ausführungen ist an der Einlaufseite des Preßschuhs 54 ein Leistenelement 32b angeordnet, das mit dem Preßschuh 54 starr verbunden ist, indem es nämlich mittels Schrauben 74 in Gewindebohrungen 72 des unterhalb des Preßschuhs 54 angeordneten Stützteils 55a festgelegt ist.

Diese Ausführung zeichnet sich durch eine erhebliche Vereinfachung gegenüber den zuvor anhand der Fig. 3 und 4 beschriebenen Ausführungen aus, da hydraulische Stellelemente und entsprechende Steuerungen hierfür nicht erforderlich sind. Da das Leistenelement 32b infolge der starren Verbindung mit dem Stützteil 55a im wesentlichen die gleiche Durchbiegung wie der Preßschuh 54 selbst erfährt, ist so ohne zusätzliche Stellelemente eine gute Führung des Preßmantels 45 an der Einlaufseite des Preßschuhs 54 sichergestellt, so daß sich auch hierbei eine gute hydrodynamische Schmierung ergibt.

Zusätzlich kann das Leistenelement 32b Längsrillen 71 aufweisen, die an der der Gegenwalze 31 zugewandten Oberfläche 33b des Leistenelementes 32b in Bahnlaufrichtung verlaufen, um die Ölschmierung in diesem Bereich weiter zu verbessern. Die Tiefe der Längsrillen 71 beträgt vorzugsweise zwischen 0,2 und 1 mm.

Eine weitere Abwandlung gegenüber der anhand von Fig. 5 beschriebenen Walze 70 ist in Fig. 6 dargestellt und insgesamt mit der Ziffer 80 bezeichnet.

Hierbei ist das Leistenelement 32c nicht mehr als selbständiges Leistenelement ausgebildet, das am Preßschuh festgelegt ist, sondern ist stattdessen einstückig mit dem Preßschuh 54c ausgebildet.

Das Leistenelement 32c stellt somit also eine Verlängerung des Preßschuhs 54c entgegen der Bahnlaufrichtung 42 dar. Der Preßmantel 45 ist wiederum über das Leistenelement 32c geführt, wobei dessen gebogene Oberfläche 33c nach der Einlaufseite eine Hinterschneidung 82 aufweist, in der sich der Schmierspalt 59 zwischen dem Preßmantel 45 und dem Preßschuh 54c ausbilden kann. Ggf. kann in diese Hinterschneidung 82 zusätzlich über seitliche oder über radiale Kanäle Schmiermittel eingeführt werden, um die hydro-dynamische Schmierung zu verbessern. Hierzu können wiederum Längsrillen 71c im Leistenelement 32c vorgesehen sein.

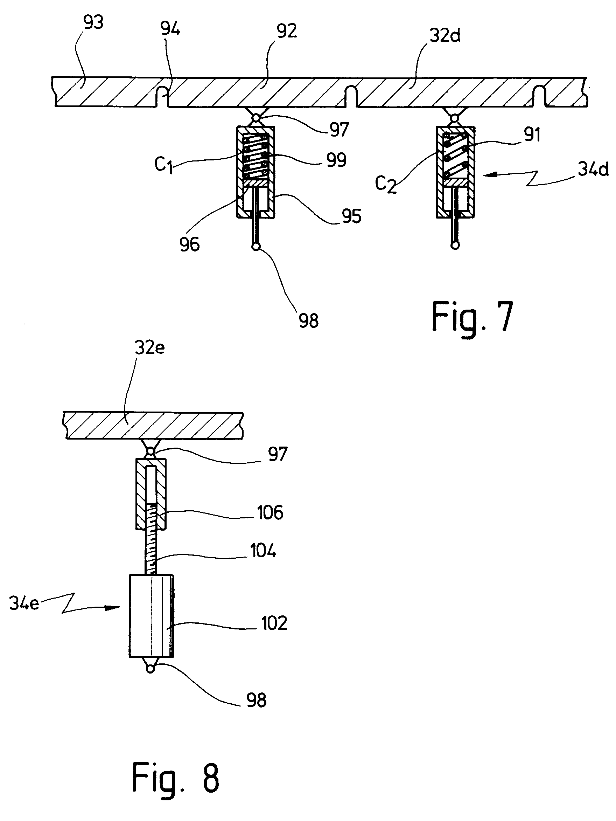

In den Fig. 7 und 8 sind weitere Abwandlungen der Erfindung dargestellt.

In Fig. 7 ist das Leistenelement 32d in Längsrichtung gesehen in eine Mehrzahl von Leistenelementabschnitten 92, 93 unterteilt, wobei die einzelnen Leistenelementabschnitte 92, 93 durch Quernuten 94 im Leistenelement 32d erzeugt sind.

Infolge der Schwächung des Materialquerschnittes im Bereich der Nuten 94 ergibt sich somit die Wirkung von Gelenken zwischen den einzelnen Leistenelementabschnitten 92, 93.

Jedes Leistenelement 92, 93 ist wiederum durch ein insgesamt mit der Ziffer 34d bezeichnetes Stellelement, das über Gelenke 97, 98 befestigt ist, abgestützt.

Die Stellelemente 34d weisen Federelemente 91 bzw. 99 auf, die innerhalb von Zylindern 95 mittels in die Zylinder eingreifender Kolben 96 zusammenpreßbar sind.

Eine Einstellung der Biegekurve des Leistenelementes 32d an eine bestimmte äußere Last wird dadurch erreicht, daß die Federkonstanten C₁, C₂ der einzelnen Stellmittel 34d entsprechend gewählt werden.

Somit kann, ohne daß eine besondere Verstellmöglichkeit vorgesehen werden muß, durch Abstimmung der Federkonstanten ein gewünschter Verlauf der Biegekurve des Leistenelementes 32d unter Last eingestellt werden. Insbesondere können hierdurch (ähnlich wie in Fig. 1 und 2 dargestellt) alle Zylinder 95 mit dem gleichen Druck beaufschlagt werden.

Bei der Ausführung gemäß Fig. 8 wird das Leistenelement 32e über Stellmittel 34e abgestützt, die einen motorisch angetriebenen Stelltrieb umfassen, wozu eine Gewindespindel 104 von einem Elektromotor 102 antreibbar ist, die in einer Gewindebohrung 106 verstellbar ist.

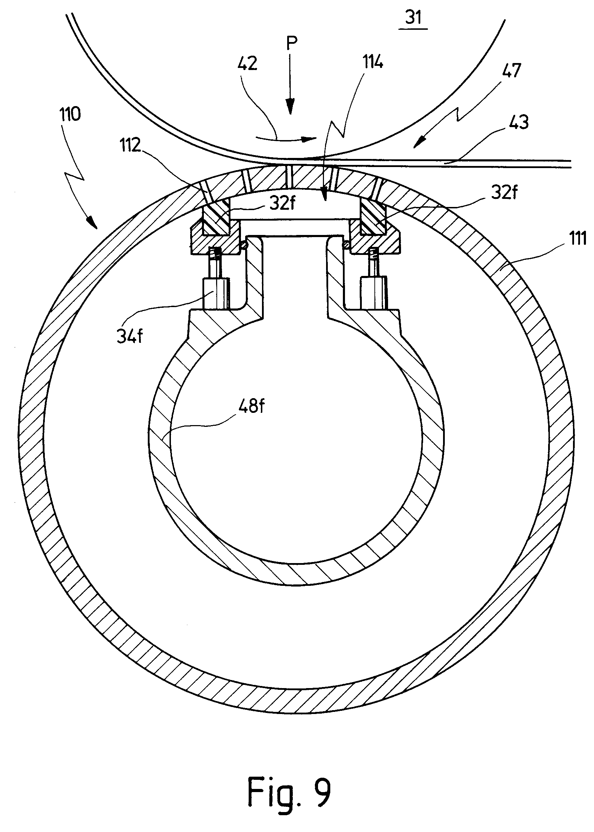

Eine weitere Ausführung einer erfindungsgemäßen Walze als Saugwalze ist in Fig. 9 insgesamt mit der Ziffer 110 bezeichnet.

Der Mantel 111 der Walze 100 ist von Saugöffnungen 112 durchsetzt (nur im oberen, der Gegenwalze 31 zugewandten Bereich dargestellt).

Zur Abdichtung einer Saugzone 114 gegen den Mantel 111 im Bereich des Preßspaltes 47 dienen zwei Leistenelemente 32f, die jeweils über mehrere axial einander gegenüberliegende an den Rändern des Leistenelementes 32f hintereinander angeordnete Stellmittel 34f gegen den Mantel 111 abgestützt sind, die an einem innenliegenden, rohrförmigen Tragkörper 48f angreifen. Die Stellmittel 34f sind in zuvor bereits beschriebener Weise als zweiseitig wirkende Hydraulikzylinder oder als einseitig wirkende Hydraulikzylinder ausgeführt, die mit Federelementen zur Rückstellung versehen sind (nicht dargestellt). Eine Absaugung kann im Bereich der Saugzone 114 erfolgen.

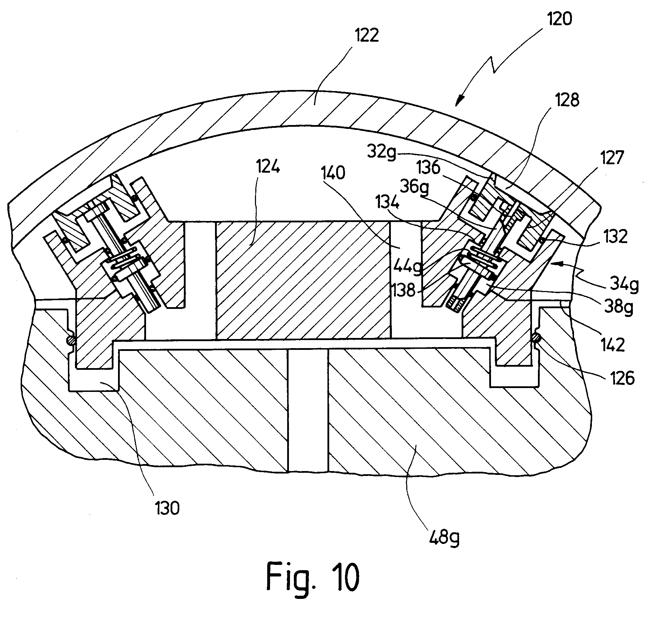

Eine weitere Ausführung der erfindungsgemäßen Walze als Durchbiegungseinstellwalze ist in Fig. 10 dargestellt und insgesamt mit der Ziffer 120 bezeichnet.

Innerhalb eines drehbar gelagerten Walzenmantels 122 befindet sich ein feststehender Tragkörper 48g. Im Tragkörper 48g ist ein Anpreßschuh 124 gelagert, der senkrecht beweglich ist und gegenüber dem Tragkörper 48g durch elastische Dichtungen 126 abgedichtet ist. Dichtungen befinden sich auch stirnseitig zwischen dem Tragkörper 48g und dem Anpreßschuh 124. Es sind zwei erfindungsgemäße Leistenelemente 32g vorgesehen, die jeweils paarweise zueinander parallel verlaufende Dichtleisten aufweisen, zwischen denen am Walzenmantel 122 Hydrostatiktaschen 128 gebildet sind, die mit Druckmittel versorgt sind.

Während in herkömmlicher Weise die Dichtleisten unmittelbar am Anpreßschuh 33 angeschraubt sind (vgl. DE-A-4 123 115), sind die erfindungsgemäßen Leistenelemente 32g mit den Dichtleisten nunmehr hydraulisch gegen den Walzenmantel 122 anpreßbar angeordnet.

Hierzu weisen die Leistenelemente 32g auf ihrer radial nach innen weisenden Seite Längsnuten 127 auf, in die Kolbenstangen 36g der Stellmittel 34g eingreifen. Die Kolbenstangen sind mittels Federelementen 44g radial nach innen beaufschlagt, die zwischen einer Stirnseite jeweils eines von dem Anpreßschuh 124 gebildeten zylindrischen Hohlraumes 38g und eines auf der Kolbenstange 36g angeordneten Kolbens 138 eingespannt sind. In den zylindrischen Hohlräumen 38g sind zwischen den Kolben 138 und dem unteren Ende der Hohlräume 38g Druckräume gebildet, die über Druckleitungen 142 mit Druck beaufschlagbar sind, um die Leistenelemente 32g radial nach außen in Richtung auf den Walzenmantel 122 zu beaufschlagen.

Die Hydrostatiktaschen 128 können über Durchlaßkanäle 136 in den Kolbenstangen 36g aus Durchlässen 140 mit Druckmittel beaufschlagt werden, über die das Druckmittel aus dem zwischen dem Anpreßschuh 124 und dem Tragkörper 48g gebildeten Druckraum 130 in die Hydrostatiktaschen 128 und in den Bereich zwischen den Leistenelementen 32g bis an den Walzenmantel 122 gelangt.

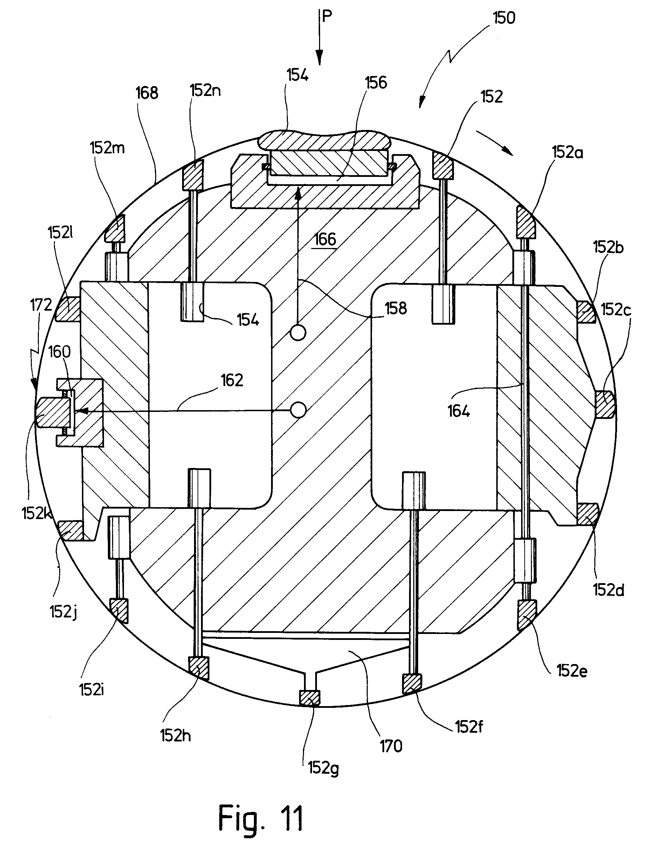

Fig. 11 zeigt eine insgesamt mit 150 bezeichnete Walze, die einen Preßmantel 168 aufweist, der über polygonal angeordnete Leistenelemente 152, 152a-n und einen Preßschuh 154 umläuft. Jene Leistenelemente 152, 152a, 152e, 152f, 152g, 152h, 152i, 152m, 152n, die bei Durchbiegung des Tragkörpers 166 in Richtung der Linienkraft P eine starke radiale Durchbiegung erfahren, sind durch Stellmittel 154 lagekompensierbar. Die Leistenelemente 152b, 152e, 152d, 152g, 152l sind mit dem Tragkörper 166 starr verbunden. Ein Leistenelement 152k ist horizontal verschieblich angeordnet zur Bildung eines zweiten Preßspaltes 172, allerdings mit geringerem Preßdruck als am Preßschuh 154, der für hohe Preßdrücke ausgelegt ist. Das Leistenelement 152k ist in gleicher Weise wie der Preßschun 154, der über einen aus einer Hydraulikleitung 158 mit Druck beaufschlagten Druckraum 156 an eine Gegenwalze anpreßbar ist, hydraulisch mittels des in einem Druckraum 160 über eine Hydraulikleitung 162 erzeugten Druckes an eine Gegenwalze oder ein gespanntes Band anpreßbar (nicht dargestellt). Nicht für jedes Leistenelement ist ein separates Stellmittel erforderlich. So können z.B. die Leistenelemente 152a und e über eine Verbindungsstange 164 gekoppelt sein, so daß eines der beiden Stellmittel entfallen kann.

Fig. 11 zeigt das Preßband 168 im unbelasteten Zustand. Bei Belastung ergeben sich insbesondere dann, wenn sich ein Schlupf zwischen dem Preßband und einer Gegenwalze einstellt, polygonartige Abschnitte des Preßbandes 168.

## Patentansprüche

1. Walze insbesondere für eine Papiermaschine, mit zumindest einem im wesentlichen in Axialrichtung der Walze (10, 30, 60, 70, 80, 110, 120, 150) verlaufenden Leistenelement (12, 32, 32a, d, e, f, g, 152, 152a - n), das mit einer Mehrzahl von Stützelementen im wesentlichen gegen radiale Kräfte abgestützt ist, dadurch gekennzeichnet, daß die Stützelemente mit Stellmitteln (14, 34, 34a, d, e, f, g, 154) gekoppelt sind, mittels derer in Abhängigkeit von einer bestimmten äußeren Last ein vorbestimmter Verlauf der Biegekurve des Leistenelementes (12, 32, 32a, d, e, f, g, 152, 152a - n) einstellbar ist.

2. Walze nach Anspruch 1, dadurch gekennzeichnet, daß die Walze (10, 30, 60, 70, 80, 120, 150) als Preßwalze für eine Papiermaschine mit einem zwischen zwei Preßelementen gebildeten Preßspalt (47) ausgebildet ist, außerhalb dessen das Leistenelement (12, 32, 32a, d, e, g, 152, 152a - j, 152l) angeordnet ist, und daß die Walze (10, 30, 60, 70, 80, 120, 150) einen Tragkörper (48, 48g, 166) zur Aufnahme der Preßkräfte aufweist, an dem die Stützelemente gelagert sind.

3. Walze nach Anspruch 1 oder 2, dadurch gekennzeichnet, daß zumindest ein Stellmittel (14, 34, 34a, f, g, 154) steuerbare hydraulische oder pneumatische Stellelemente umfaßt.

4. Walze nach Anspruch 3, dadurch gekennzeichnet, daß zumindest ein Stellmittel (34, 34a, f, g) einen einseitig wirkenden Fluidzylinder (18, 38, 38a, g) umfaßt, dem ein Federelement (44, 44g) zur Rückstellung zugeordnet ist.

5. Walze nach einem oder mehreren der vorhergehenden Ansprüche, dadurch gekennzeichnet, daß zumindest ein Stellmittel (14, 154) einen zweiseitig wirkenden Fluidzylinder (18) umfaßt.

6. Walze nach einem oder mehreren der vorhergehenden Ansprüche, dadurch gekennzeichnet, daß die Stellmittel (34d) Federelemente (91, 99) mit unterschiedlichen Federkonstanten (C₁, C₂) umfassen, die auf eine bestimmte Durchbiegung der Walze unter Last abgestimmt sind, um einen vorgegebenen Verlauf der Biegekurve des Leistenelementes (32d) einzustellen.

7. Walze nach einem oder mehreren der vorhergehenden Ansprüche, dadurch gekennzeichnet, daß zumindest ein Stellmittel (34e) einen motorisch angetriebenen Stelltrieb (104, 106) umfaßt.

8. Walze nach einem oder mehreren der vorhergehenden Ansprüche, dadurch gekennzeichnet, daß die Stellmittel (14, 34d, e) gelenkig mit dem Tragkörper verbunden sind.

9. Walze nach einem oder mehreren der vorhergehenden Ansprüche, dadurch gekennzeichnet, daß das Leistenelement (32d) axial in eine Mehrzahl von Leistenelementabschnitten (92, 93) unterteilt ist, die gelenkig miteinander verbunden sind.

10. Walze nach einem oder mehreren der vorhergehenden Ansprüche, dadurch gekennzeichnet, daß die Walze (30, 60) einen hydraulisch anstellbaren Preßschuh (54) aufweist, über den ein Preßmantel (45) geführt ist, der über Schmiermittel umläuft, und daß das zumindest eine Leistenelement (32, 32a) in Bahnlaufrichtung (42) gesehen unmittelbar vor dem Preßspalt (47) angeordnet ist.

11. Walze nach einem oder mehreren der vorhergehenden Ansprüche, dadurch gekennzeichnet, daß das Leistenelement (32a) Mittel (62, 63, 64, 66) zur Absaugung überschüssigen Schmiermittels aufweist.

12. Walze nach einem oder mehreren der vorhergehenden Ansprüche, dadurch gekennzeichnet, daß die Walze als Saugwalze (110) oder als Durchbiegungseinstellwalze (120) ausgebildet ist.

13. Walze für eine Papiermaschine mit einem zwischen zwei Walzen gebildeten Preßspalt (47) mit einem hydraulisch an eine Gegenwalze (31) anpreßbaren Preßschuh (54, 54c), über den ein Preßmantel (45) umläuft, wobei die Walze (70, 80) zumindest ein außerhalb des Preßspaltes (47) im wesentlichen axial angeordnetes Leistenelement (32b, 32c) aufweist, das gegen im wesentlichen radiale Kräfte abgestützt ist, dadurch gekennzeichnet, daß das Leistenelement (32b, 32c) am Preßschuh (54, 54c) festgelegt ist.

14. Walze nach Anspruch 13, dadurch gekennzeichnet, daß das Leistenelement (32, 32c) in Bahnlaufrichtung (42) gesehen unmittelbar vor dem Preßschuh (54, 54c) angeordnet ist.

15. Walze nach Anspruch 14, dadurch gekennzeichnet, daß das Leistenelement (32c) einstückig mit dem Preßschuh (54c) ausgebildet ist.

16. Walze nach einem oder mehreren der vorhergehenden Ansprüche, dadurch gekennzeichnet, daß wenigstens ein Leistenelement (32f, 32g) zur Abdichtung zwischen Bereichen unterschiedlichen Druckes vorgesehen ist.

17. Walze nach einem oder mehreren der vorhergehenden Ansprüche, dadurch gekennzeichnet, daß das Leistenelement (32b, 32c) Längsrillen (71, 71c) aufweist.

18. Walze nach einem oder mehreren der vorhergehenden Ansprüche, dadurch gekennzeichnet, daß eine Mehrzahl von Leistenelementen (152, 152a - n) entlang des Walzenumfanges polygonartig angeordnet ist.

19. Walze nach einem oder mehreren der vorhergehenden Ansprüche, dadurch gekennzeichnet, daß wenigstens zwei Leistenelemente (152a, 152e, 152f, 152g, 152h) über ein Koppelelement (164; 170) zur gemeinsamen Bewegung gekoppelt sind.

20. Walze nach einem oder mehreren der vorhergehenden Ansprüche, dadurch gekennzeichnet, daß wenigstens ein Leistenelement (152k) einen Preßspalt (172) bildet.
